# EUROPÄISCHE PATENTSCHRIFT

(11) **EP 2 409 383 B1**
(45) Veröffentlichungstag und Bekanntmachung des Hinweises auf die Patenterteilung: **14.05.2014**
(21) Anmeldenummer: 10703030.6
(22) Anmeldetag: 19.01.2010
(51) Int. Cl.: H02K 1/26, H02K 3/52

(54) **ANKERBAUGRUPPE UND ELEKTROMASCHINE MIT EINER ANKERBAUGRUPPE**
ARMATURE ASSEMBLY AND ELECTRIC MACHINE INCLUDING AN ARMATURE ASSEMBLY
MODULE D'INDUIT ET MACHINE ÉLECTRIQUE AVEC UN MODULE D'INDUIT

(30) Priorität: 09.11.2009 DE 102009046530; 19.03.2009 DE 102009001647
(43) Veröffentlichungstag der Anmeldung: 25.01.2012
(73) Patentinhaber: Robert Bosch GmbH, 70442 Stuttgart (DE)
(72) Erfinder: HERP, Juergen, 77815 Buehl (DE); MILI, Tarek, 76133 Karlsruhe (DE); SCHMIDT, Ralf, 77871 Renchen (DE); SUKHMAN, Maxim, 76534 Baden-Baden (DE)
(86) Internationale Anmeldenummer: PCT/EP2010/050592
(87) Internationale Veröffentlichungsnummer: WO 2010/105862

(56) Entgegenhaltungen:
- EP-A1- 1 292 003
- WO-A1-2008/075667
- DD-A1- 269 954
- DD-A5- 286 694
- DE-A1- 1 538 728
- DE-A1- 2 126 378
- DE-A1- 3 335 791
- DE-C- 950 481
- FR-A1- 2 247 842
- GB-A- 994 369
- US-A- 3 097 320
- US-A- 3 244 919
- US-A- 3 783 501
- US-A- 3 973 738

## Beschreibung

### Stand der Technik

Die Erfindung betrifft eine Ankerbaugruppe gemäß dem Oberbegriff des Anspruchs 1 und eine Elektromaschine mit einer Ankerbaugruppe.

Aus der DE 691 15 232 T2 ist bereits eine Ankerbaugruppe nach dem Oberbegriff des Anspruchs 1 bekannt. Bei der bekannten Ankerbaugruppe wird der Ankerdraht direkt auf das aus den Ankerblechen bestehende Ankerpaket gewickelt, wobei die Stirnseiten des Ankerpakets plan ausgebildet sind. Solange der Ankerdraht jeweils nur über eine Zahnreihe (eine so genannte Einzelzahnwicklung) gewickelt ist, wie dies in Fig. 2 der DE 691 15 232 T2 dargestellt ist, ist eine derartige Ausbildung der Ankerbaugruppe bzw. des Ankerpakets bei geringem Raumbedarf wirtschaftlich herstellbar. Jedoch ist bereits bei einer Einzelzahnwicklung zur Erzielung eines möglichst kompakten Aufbaus bei geringem Materialeinsatz ein hoher Nutfüllungsgrad erwünscht, das heißt, dass der aus Kupfer bestehende Ankerdraht die Nuten der Ankerbaugruppe möglichst vollständig ausfüllen sollte. Dazu ist es erforderlich, dass der Ankerdraht auch den radial innenliegenden Raum der Nuten möglichst vollständig ausfüllt. Bei der bekannten Ausführung der Ankerbaugruppe mit den planen Stirnflächen hat der Ankerdraht jedoch die Tendenz, beim Wickeln sich radial nach außen zu bewegen, so dass der Nutfüllungsgrad, der sich üblicherweise erzielen lässt, nicht optimal ist.

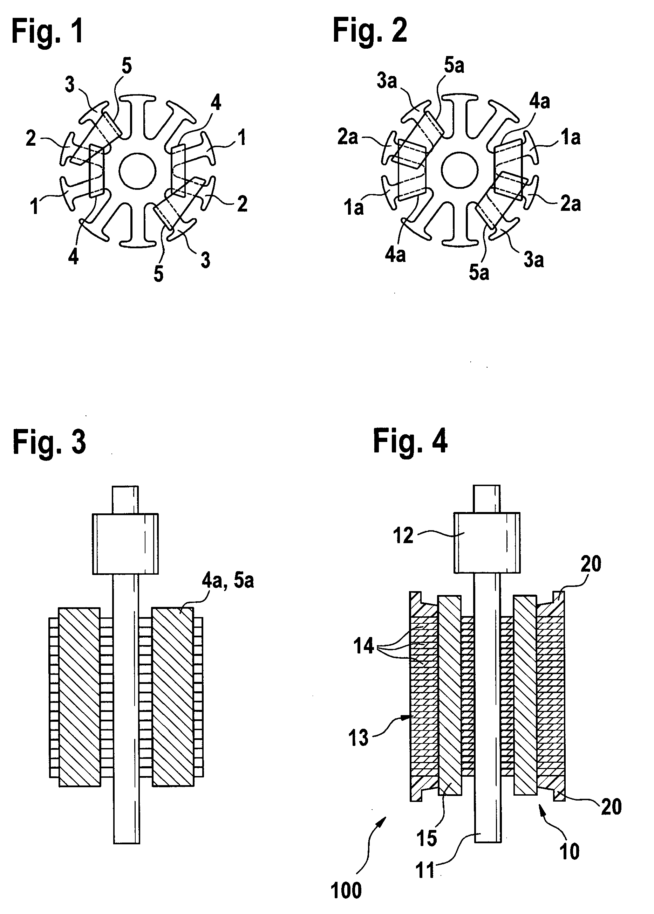

Im Gegensatz zu der Einzelzahnwicklung gibt es darüber hinaus auch Wickelarten für den Ankerdraht, bei denen ein und dieselbe Zahnreihe des Ankerpakets mit mehreren Lagen Ankerdraht zumindest teilweise umwickelt wird. In der angefügten Zeichnung ist in Fig. 1 ein derartiges Beispiel dargestellt, bei der zwei Gruppen mit Zähnen 1 bis 3 mit jeweils zwei Wickellagen 4 und 5 umwickelt sind. Hierbei sind die Zähne 1 und 2 jeweils gemeinsam mit der ersten Wickellage 4, und die Zähne 2 und 3 jeweils gemeinsam mit der zweiten Wickellage 5 umwickelt. In Fig. 1 ist hierbei eine idealisierte Soll-Verteilung der Wickellagen 4 und 5 dargestellt, bei der die erste Wickellage 4 sich jeweils am radial inneren Bereich der Zähne 1 und 2 konzentriert. Die zweite Wickellage 5 schließt sich idealerweise am Zahn 2 am radial äußeren Bereich an, wobei die beiden Wickellagen 4 und 5 jeweils stirnseitig betrachtet eine gleichmäßige Breite aufweisen. Es hat sich nun auch bei derartigen Wickelarten herausgestellt, dass bei den bekannten Ankerbaugruppen mit planen Stirnseiten die erste Wickellage dazu tendiert, sich radial gesehen über die gesamte Breite der Zahnreihen zu erstrecken. In Fig. 2 und 3 ist eine aus der Praxis bekannte Ist-Verteilung der beiden Wickellagen 4a und 5a dargestellt. Man erkennt, dass die erste Wickellage 4a sich über die gesamte Breite der Zähne 1a und 2a verteilt. Infolge dessen verbleibt für die zweite Wickellage 5a am Zahn 2a nur ein relativ geringer Raum am äußeren radialen Bereich. Daher erscheint die zweite Wickellage 5a um die Zähne 2a und 3a von der Stirnseite betrachtet her ungleichförmig, da sie am Zahn 2a eine geringere Breite aufweist als am Zahn 3a. Eine derartige Verteilung der Wickellagen 4a und 5a schränkt ebenfalls den Nutfüllungsgrad der Ankerbaugruppe ein.

Ferner sind beispielsweise aus der DE 103 35 559 A1 an den Stirnseiten des Ankerpakets angeordnete, aus Kunststoff bestehende Isoliersterne bekannt. Derartige Isoliersterne sind jedoch in der Praxis möglichst dünn und eben ausgebildet, da sie lediglich zu Isolationszwecken dienen.

In der FR 2247842 ist ein Rotor bekannt geworden, der ein aus einzelnen Blechlamellen zusammengesetztes Rotorpaket aufweist. An den axialen Enden des Blechpakets sind jeweils Endsterne angeordnet, deren radial äußere Zahnenden axial umgebogen sind, um die Rotorwicklung aufzunehmen.

Die US 3,097,320 zeigt ebenfalls einen Rotor aus Blechlamellen, bei dem die Stirnseiten der Rotorzähne in Umfangsrichtung gewölbt ausgebildet sind. An den radial äußeren Enden weisen die Rotorzähne eine axiale Ausformung auf, um ein Abrutschen der Rotorwicklung zu verhindern.

### Offenbarung der Erfindung

Der Erfindung liegt daher die Aufgabe zugrunde, eine Ankerbaugruppe auszubilden, bei der sich ein möglichst hoher Nutfüllungsgrad erzielen lässt.

Diese Aufgabe wird erfindungsgemäß bei einer Ankerbaugruppe mit den Merkmalen des Anspruchs 1 gelöst. Der Erfindung liegt dabei der Gedanke zugrunde, durch geneigte Stirnflächen an der Ankerbaugruppe beim Wickeln eine Konzentration des Ankerdrahtes im radial inneren Bereich zu begünstigen. Die Orientierung und Verdichtung des Ankerdrahtes zum radial inneren Bereich der Ankerbaugruppe hin hat neben der bereits angesprochenen Erhöhung des Nutfüllungsgrades und somit einer Reduktion der Baugröße und des Materialeinsatzes der Ankerbaugruppe darüber hinaus noch den Vorteil, dass die Wicklungen des Ankerdrahtes beim Betrieb besser in den Nutinnenräumen fixiert sind, so dass ein Lösen oder Lockern des Ankerdrahtes zumindest erschwert ist. Die erfindungsgemäße Ausführung bezieht sich auf eine Ankerbaugruppe (10), mit einem aus einer Vielzahl von Ankerblechen (14; 40, 41) bestehenden Ankerpaket (13; 13a), das auf einer Ankerwelle (11) drehfest angeordnet ist, wobei die aneinander geschichteten Ankerbleche (14; 40, 41) jeweils in gleichmäßigen Winkelabständen zueinander angeordnete, sich radial erstreckende Zähne (18; 18a; 18b) mit T-förmigen Abschlussbereichen (19; 19a; 19b) aufweisen, wobei die Zähne (18; 18a; 18b) des Ankerpakets (13; 13a) sich in Längsrichtung erstreckende Zahnreihen ausbilden, um die wenigstens ein Ankerdraht (15) in mehreren Lagen um zumindest mehrere Zahnreihen gewickelt ist, so dass der Ankerdraht (15) in den zwischen den Zähnen (18; 18a; 18b) ausgebildeten rinnenförmigen Nutbereichen (35) angeordnet ist, wobei das Ankerpaket (13; 13a) an seinen beiden gegenüberliegenden Stirnseiten Stirnflächen (28; 31; 43) aufweist, die zumindest teilweise in ihren radial äußeren Bereichen einen größeren Abstand zueinander aufweisen als an ihren radial inneren Bereichen.

Die Erfindung lässt sich in vorteilhafter Weise ohne zusätzliche Bauteile und somit besonders platzsparend realisieren, wenn die Zähne der stirnseitig jeweils ersten Ankerbleche von den darunter liegenden Zähnen der Ankerbleche des Ankerpakets weggebogen sind, so dass eine trichterförmige Stirnfläche ausgebildet wird. Durch den Verzicht auf zusätzliche Bauteile ist eine derartige Ausbildung auch besonders preiswert herstellbar.

Um die Steifigkeit der stirnseitig ersten gebogenen Ankerbleche beim Bewickeln zu erhöhen und gleichzeitig ein Lockern des Ankerdrahtes auch während des Betriebes zu verhindern, ist es dabei vorgesehen, dass die T-förmigen Abschlussbereiche der Zähne der ersten Ankerbleche in Richtung der darunter liegenden Zähne der Ankerbleche umgebogen sind und mit diesen kontaktieren.

Vorteilhafte Weiterbildungen der erfindungsgemäßen Ankerbaugruppe sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Es kann vorgesehen sein, dass der Ankerdraht zumindest auf der einem Kommutator zugewandten Seite unmittelbar vor dem Verbinden mit dem Kommutator in einem radial umlaufenden Zwischenraum zwischen dem die weggebogenen Zähne aufweisenden Ankerblech und dem darunter liegenden Ankerblech angeordnet ist.

Eine radial ausgebildete Ausnehmung zur Aufnahme des Ankerdrahtes, um die Wicklungen radial zu sichern kann auch dadurch gebildet werden, dass bevorzugt das Ankerblech, welches sich vor dem letzten Ankerblech des Ankerpakets auf der einem Kommutator zugewandten Seite befindet in seinem radial äußeren Bereich gekürzte Zähne aufweist.

Eine Elektromaschine - insbesondere Elektromotor - mit einer erfindungsgemäßen Ankerbaugruppe hat durch den hohen Nutfüllungsgrad den Vorteil eines relativ kompakten Aufbaus bei geringem Materialeinsatz und somit reduzierten Kosten.

Bei einer bevorzugten Ausführungsform zum technologischen Hintergrund der Erfindung ist es vorgesehen, dass an den Stirnseiten des Ankerpakets jeweils ein vorzugsweise aus Kunststoff bestehender Endstern angeordnet ist, der radial nach außen ragende Arme aufweist, wobei die Arme an den Stirnseiten des Ankerpakets Anlageflächen für den Ankerdraht ausbilden und wobei sich der Abstand zwischen der Anlagefläche und dem ihr benachbart angeordneten Ankerblech radial betrachtet von innen nach außen vergrößert. Mittels derartiger Endsterne lassen sich auf einfache Weise die gewünschten Stirnflächen am Ankerpaket verwirklichen, wobei die Endsterne gleichzeitig elektrische Isolationseigenschaften aufweisen.

Besonders bevorzugt ist es hierbei, wenn die Form der Arme der Endsterne in radialer Richtung betrachtet keilförmig ist. Dadurch hat der Ankerdraht beim Bewickeln auch in dem radial äußeren Bereich des Ankerpakets die Tendenz, sich radial nach innen zu orientieren bzw. zu konzentrieren.

Stattdessen kann es jedoch je nach Anwendungsfall, d.h., je nach Wickelart und verwendetem Ankerdraht auch vorteilhaft sein, wenn der Endstern wenigstens zwei Bereiche mit jeweils gleicher Dicke aufweist, so dass der Endstern eine stufenartige Stirnfläche aufweist.

Bei der Verwendung von Endsternen ist es zum Verhindern des radialen Austritts des Ankerdrahtes bevorzugt vorgesehen, dass die Arme der Endsterne T-förmige Abschlussplatten tragen.

Die Betriebssicherheit lässt sich darüber hinaus bei einer weiteren bevorzugten Ausführungsform zusätzlich erhöhen, wenn die Abschlussplatten auf der den Ankerblechen gegenüberliegenden Seite verlängert ausgebildet sind.

Bei der Verwendung von aus Kunststoff bestehenden Endsternen ist es besonders vorteilhaft, wenn diese durch Umspritzen des Ankerpakets gebildet werden. Dadurch lassen sich in einem Herstellschritt neben den Endsternen ggf. gleichzeitig zusätzliche Isolationsmaßnahmen am Ankerpaket verwirklichen.

Um die Wicklungslagen der Ankerbaugruppe radial zu sichern ist es darüber hinaus in einer vorteilhaften konstruktiven Ausgestaltung vorgesehen, dass zumindest der einem Kommutator zugewandte Endstern an seinem Außenumfang einen radial umlaufenden Bereich aufweist, in dem wenigstens eine Lage des Ankerdrahtes gewickelt ist und, dass der nicht am Umwickeln des Bereichs vorgesehene Endabschnitt des Ankerdrahtes mit dem Kommutator elektrisch kontaktiert ist. Eine derartige Lösung ist nahezu kostenneutral herzustellen, da der umwickelte Bereich des Endsterns, in dem der Ankerdraht angeordnet ist lediglich eine entsprechende Ausbildung des Werkzeuges zur Herstellung des Endsternes benötigt. Die zusätzlichen Werkstoffkosten durch Umwickeln des Ankerdrahtes in dem Bereich des Endsternes sind dem gegenüber vernachlässigbar gering.

Besonders bevorzugt ist hierbei, dass der in dem Bereich des Endsterns angeordnete Ankerdraht innerhalb des Außenumfangs des Endsterns angeordnet ist. Dadurch wird insbesondere die Gefahr einer möglichen Berührung des Ankerdrahtes mit dem den Ankerdraht bzw. das Ankerpaket umgebenden Magnetbauteilen verhindert.

Eine Ausbildung des Bereiches in dem Endstern zur Führung des Ankerdrahtes als Nut hat den Vorteil, dass der Ankerdraht dadurch eindeutig geführt ist und eine axiale Verschiebung des Ankerdrahtes in dem Bereich verhindert wird.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1 und Fig. 2: Darstellungen einer Soll- bzw. Ist-Verteilung von zwei Wickellagen an einer Ankerbaugruppe nach dem Stand der Technik in Draufsicht,
- Fig. 3: einen Längsschnitt durch eine Ankerbaugruppe bei einer Ist-Verteilung der Wickellagen bei einer Ankerbaugruppe nach dem Stand der Technik gemäß Fig. 2,
- Fig. 4: eine erste Ankerbaugruppe als technologischer Hintergrund im Längsschnitt,
- Fig. 5: ein einzelnes Ankerblech aus der Ankerbaugruppe gemäß Fig. 4 in Draufsicht,
- Fig. 6: einen einzelnen ersten Endstern, wie er bei der Ankerbaugruppe gemäß Fig. 4 Verwendung findet, in einer perspektivischen Ansicht,
- Fig. 7: eine zweite Ankerbaugruppe technologischer Hintergrund im Längsschnitt,
- Fig. 8: einen einzelnen zweiten Endstern, wie er bei der Ankerbaugruppe gemäß Fig. 7 Verwendung findet, in einem Längsschnitt,
- Fig. 9: eine erfindungsgemäße Ankerbaugruppe mit zwei unterschiedlichen Ankerblechausbildungen in perspektivischer Ansicht,
- Fig. 10: eine Ankerbaugruppe technologischer Hintergrund mit einem modifizierten Endstern zur radialen Sicherung der Wicklungslagen und
- Fig. 11: die erfindungsgemäße Ankerbaugruppe gemäß Fig. 9 in einer modifizierten Ausführung, bei der der mit dem Kommutator verbundene Ankerdraht zuvor in einem radial ausgebildeten Zwischenraum gewickelt ist, in perspektivischer Ansicht.

In Fig. 4 ist eine erste Ankerbaugruppe 10 vereinfacht dargestellt, die Teil einer im Übrigen nicht näher dargestellten Elektromaschine 100, beispielsweise eines Elektromotors, ist.

Die Ankerbaugruppe 10 weist eine Ankerwelle 11 auf, an deren einem Ende ein Kommutator 12 auf die Ankerwelle 11 aufgepresst oder aufgeklebt ist. Im mittleren Bereich der Ankerwelle 11 befindet sich ein Ankerpaket 13, das aus einer Vielzahl aneinandergeschichteter, bevorzugt aus ferromagnetischem Material wie Weicheisen bestehenden Ankerblechen 14 besteht. Auf das so ausgebildete Ankerpaket 13 ist ein Ankerdraht 15 aufgewickelt.

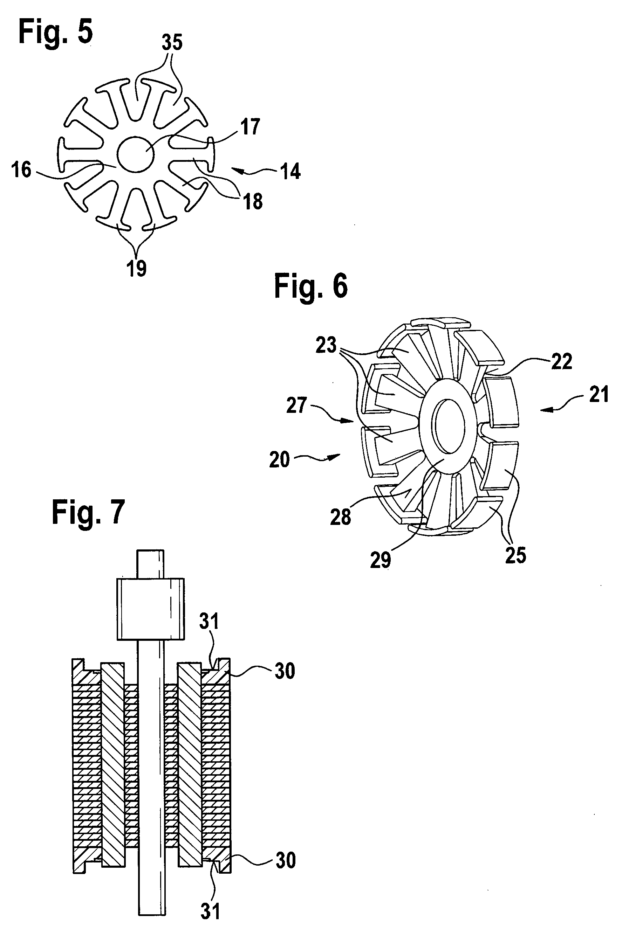

Die jeweils identisch ausgebildeten, insbesondere durch Stanzen hergestellten Ankerbleche 14 weisen gemäß Fig. 5 einen ringförmigen, zentralen Bereich 16 mit einem Loch 17 für die Ankerwelle 11 auf. Vom zentralen Bereich 16 gehen sternförmig in gleichmäßigen Winkelabständen zueinander angeordnete Zähne 18 aus, die an ihrem radial äußeren Ende jeweils in einen T-förmigen Abschlussbereich 19 übergehen. Das aus den einzelnen Ankerblechen 14 gebildete Ankerpaket 13 wird auf der Ankerwelle 11 z.B., durch Aufpressen befestigt.

An den beiden einander gegenüberliegenden Stirnseiten des Ankerpakets 13 ist jeweils ein Endstern 20 angeordnet. Der in Fig. 6 separat dargestellte Endstern 20 weist auf seiner den Ankerblechen 14 zugewandten Rückseite 21 eine plan ausgebildete Anlagefläche 22 auf, die vollflächig auf dem ihr zugewandten letzten Ankerblech 14 des Ankerpakets 13 aufliegt. Weiterhin ist, in Draufsicht betrachtet, die Form des Endsterns 20 der Form der Ankerbleche 14 angepasst. Das bedeutet, dass der Endstern 20 eine der Anzahl der Zähne 18 der Ankerbleche 14 entsprechende Zahl an Armen 23 aufweist, die deckungsgleich mit den Zähnen 18 ausgebildet bzw. angeordnet sind. Ferner ist vorgesehen, dass der aus elektrisch nicht leitendem Kunststoff, wahlweise auch aus magnetisch leitfähigem Material, bestehende Endstern 20 an den radial äußeren Enden der Arme 23 Abschlußplatten 25 trägt. Die Form der Abschlussplatten 25 ist einerseits der Form der T-förmigen Abschlussbereiche 19 der Ankerbleche 14 angepasst. Andererseits ist bevorzugt vorgesehen, dass die Abschlussplatten 25 auf der den Ankerblechen 14 abgewandten Seite erhöht bzw. verlängert ausgebildet sind.

Wesentlich ist, dass die den Ankerblechen 14 abgewandte Vorderseite 27 des Endsterns 20 eine zumindest teilweise geneigte, als Anlagefläche für den Ankerdraht 15 wirkende Stirnfläche 28 aufweist. Im Ausführungsbeispiel gemäß Fig. 6 weist dabei der ringförmige Mittelbereich 29 des Endsterns 20 eine konstante Dicke auf, während sich die Dicke der Arme 23 radial von innen nach außen betrachtet vergrößert, vorzugsweise stetig. Das bedeutet, dass die Arme 23 im Längsschnitt betrachtet keilförmig ausgebildet sind. Eine derartige Ausbildung der Arme 23 begünstigt beim Wickeln des Ankerdrahtes 15 um die Zähne 18 und die Arme 23 des Ankerpakets 13 eine Konzentration des Ankerdrahtes 15 im radial inneren Bereich der Endsterne 20 und der Ankerbleche 14.

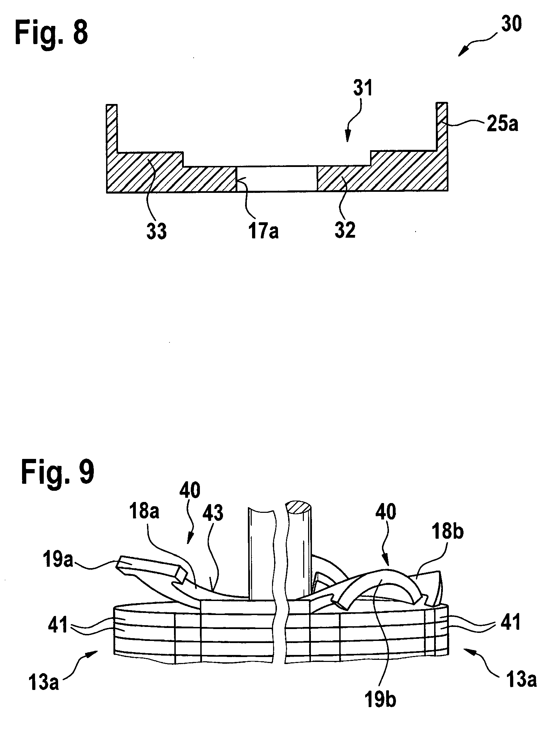

Bei dem in den Fig. 7 und 8 dargestellten zweiten Ausführungsbeispiel des technologischen Hintergrunds weisen die beiden Endsterne 30 auf der den Ankerblechen 14 abgewandten Seite jeweils eine gestufte Stirnfläche 31 auf. Wie man am besten anhand Fig. 8 erkennt, besitzen die Endsterne 30 dabei zwei Bereiche 32, 33, an denen der Ankerdraht 15 anliegt, die jeweils eine konstante Dicke aufweisen. Der erste, innere Bereich 32, in dem auch das Loch 17a für die Ankerwelle 11 angeordnet ist, weist dabei eine geringere Dicke auf als der äußere Bereich 33. An den äußeren Bereich 33 schließen sich radial außen entsprechend dem Endstern 20 Abschlussplatten 25a an.

Ergänzend wird erwähnt, dass die Endsterne 20 und 30 als separate Bauelemente im Spritzgußverfahren hergestellt sein können, die bei der Montage der Ankerbaugruppe 10 auf die Ankerwelle 11 bis an die stirnseitig jeweils äußeren Ankerbleche 14 aufgeschoben werden. Hierbei ist bevorzugt vorgesehen, dass die von den Zähnen 18 der Ankerbleche 14 gebildeten Nutinnenseiten 35 mit einer elektrischen Isolierung, beispielsweise einer Folienisolierung, ausgestattet sind.

Alternativ hierzu ist es jedoch auch denkbar, die Form der Endsterne 20, 30 in eine so genannte Isoliermaske einzuarbeiten. Mittels dieser Isoliermaske werden sowohl die Isolierung an den Nutinnenseiten 35 des Ankerpakets 13, als auch die Endsterne 20, 30 in einem Herstellschritt im Kunststoffspritzverfahren gleichzeitig hergestellt. Das so gebildete Bauteil (Isolierung der Nutinnenseiten 35 und Endsterne 20 bzw. 30) lässt sich dann mit den Ankerblechen 14 verbinden und auf der Ankerwelle 11 montieren.

Als weitere Alternative ist es denkbar, das aus den Ankerblechen 14 bestehende Ankerpaket 13 insgesamt mit Kunststoff zu umspritzen, wobei sowohl die Isolierung an den Nutinnenseiten 35 als auch die Endsterne 20 bzw. 30 geformt bzw. angespritzt werden.

In Abänderung zu den beschriebenen Endsternen 20 bzw. 30 ist es darüber hinaus denkbar, dass die Abschlussplatten 25, 25a als separate Bauteile, zum Beispiel in Form von Kunststoffschiebern oder in Art von Clips realisiert werden, die vor oder nach dem Bewickeln des Ankerpakets 13 mit dem Ankerdraht 15 an den Endsternen montiert werden, um den Ankerdraht 15 am axialen Austritt zu hindern.

In Fig. 9 sind der Vereinfachung halber ein drittes und ein viertes Ausführungsbeispiel gleichzeitig dargestellt. Bei diesen Ausführungsbeispielen kann auf separate Endsterne 20 bzw. 30 verzichtet werden. Wesentlich dabei ist, dass das jeweils stirnseitig betrachtet äußere Ankerblech 40 des Ankerpakets 13a in besonderer Weise ausgebildet bzw. geformt ist. Hierbei sind insbesondere zwei Alternativen bevorzugt denkbar.

Bei der ersten Alternative sind die Zähne 18a zusammen mit den Abschlussbereichen 19a in radialer Richtung betrachtet von den darunter angeordneten Ankerblechen 41 vorzugsweise gleichmäßig weggebogen, so dass sich im Bereich der Abschlussbereiche 19a der größte Abstand zu den darunter liegenden Ankerblechen 41 ergibt. Die Stirnflächen 43 der Zähne 18a sind somit geneigt bzw. trichterförmig ausgebildet, wobei die Ankerbleche 40 an ihrem radial inneren Bereich an den darunter liegenden Ankerblechen 41 anliegen.

Bei der zweiten Alternative gemäß der Erfindung sind die Abschlussbereiche 19b an den Zähnen 18b zusätzlich in Richtung der darunter angeordneten Abschlussbereiche 19 der Ankerbleche 41 umgebogen und liegen auf diesen auf. Dadurch wird die Elastizität der Zähne 18b zumindest reduziert, so dass sich der Ankerdraht 15 mit hoher Spannung auf das Ankerpaket 13a wickeln lässt und somit ein Lockern des Ankerdrahtes 15 langfristig verhindert wird.

Ergänzend wird erwähnt, dass es bei dem in Fig. 9 dargestellten dritten und vierten Ausführungsbeispiel bevorzugt vorgesehen ist, alle Zähne 18a bzw. 18b des Ankerblechs 40 entsprechend von den darunter liegenden Zähnen der Ankerbleche 41 wegzubiegen. Dadurch lassen sich insgesamt betrachtet geneigte Stirnflächen an dem Ankerpaket 13a erzielen, die beim Bewickeln des Ankerpakets 13 mit dem Ankerdraht 15 eine Konzentration des Ankerdrahtes 15 zum radial inneren Bereich des Ankerpaketes 13a hin begünstigen.

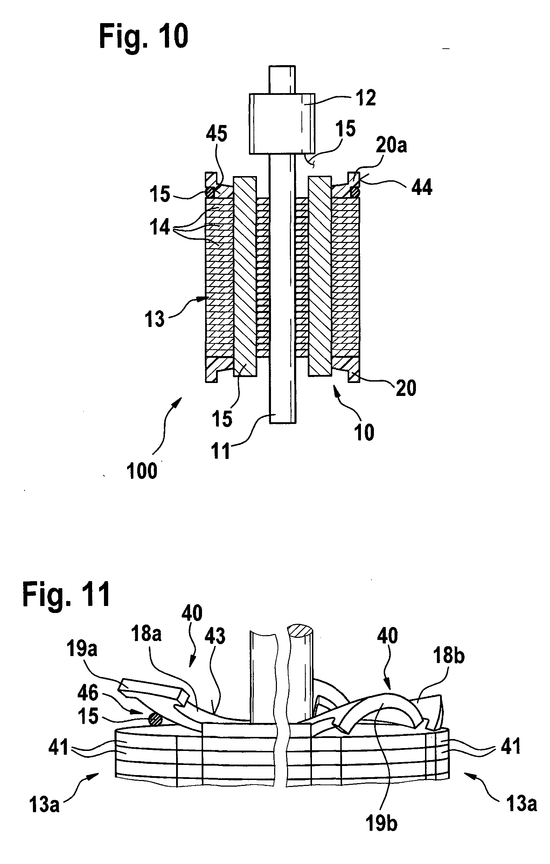

In der Fig. 10 weist die Ankerbaugruppe 10 einen modifizierten Endstern 20a auf, der auf der dem Kommutator 12 zugewandten Seite angeordnet ist. Der modifizierte Endstern 20a weist an seinem Außenumfang 44 einen radial umlaufenden, in seinem Durchmesser reduzierten Bereich in Form einer Nut 45 auf. Die Nut 45 dient der Führung des Ankerdrahtes 15, wobei in der Nut 45 der Endabschnitt des Ankerdrahtes 15 angeordnet ist, welcher nach der Bewicklung der Nut 45 mit dem Kommutator 12 elektrisch verbunden wird. Durch das Bewickeln der Ankerbaugruppe 10 bzw. der Nut 45 in dem Endstern 20a werden die einzelnen Wicklungslagen 4, 4a, 5, 5a radial gesichert. Wichtig ist noch, dass der in der Nut 45 angeordnete Ankerdraht 15 innerhalb des Außenumfangs 44 des Endsterns 20a angeordnet ist bzw. den Außenumfang nicht überragt.

Ergänzend wird erwähnt, dass eine derartige Modifikation des Endsterns 20a mit einer Nut 45 selbstverständlich auch auf einen Endstern 30 gemäß der Fig. 8 übertragbar ist.

In der Fig. 11 ist eine weitere Modifikation der Erfindung dargestellt, bei der der mit dem Kommutator 12 elektrisch kontaktierte Endabschnitt des Ankerdrahtes 15 in dem zwischen die weggebogenen Zähne 18a aufweisenden Ankerblech 40 und dem darunter liegenden Ankerblech 41 in einem Zwischenraum 46 in wenigstens einer Wicklungslage angeordnet ist. Auch bei dieser Ausführungsform dient die Wicklung bzw. die Wicklungen des Ankerdrahtes 15 in dem Zwischenraum 46 der radialen Sicherung der Wicklungslagen 4, 4a, 5, 5a des Ankerpakets 13a.

Alternativ kann es auch vorgesehen sein, den Ankerdraht 15 im Bereich wenigstens eines Ankerblechs 41 anzuordnen, bei dem die radial äußeren Bereiche der Zähne 18 gekürzt sind, und somit einen radial umlaufenden Zwischenraum ausbilden. Hierbei schließt sich an das bzw. die mit den gekürzten Zähnen 18 ausgebildete Ankerblech 41 auf der dem Kommutator 12 zugewandten Seite noch wenigstens ein Ankerblech 40, 41 an, dessen Zähne 18, 18a nicht gekürzt sind, um den Ankerdraht 15 axial in Richtung des Kommutators 12 zu sichern. Hierbei ist es ggf. nicht erforderlich, das wenigstens eine Ankerblech 40, 41 mit weggebogenen Zähnen 18, 18a zu versehen.

## Patentansprüche

1. Ankerbaugruppe (10), mit einem aus einer Vielzahl von Ankerblechen (14; 40, 41) bestehenden Ankerpaket (13; 13a), das auf einer Ankerwelle (11) drehfest angeordnet ist, wobei die axial aneinander geschichteten Ankerbleche (14; 40, 41) in Winkelabständen zueinander angeordnete, sich radial erstreckende Zähne (18; 18a; 18b) mit Abschlussbereichen (19; 19a; 19b) aufweisen, wobei die Zähne (18; 18a; 18b) des Ankerpakets (13; 13a) sich in Längsrichtung erstreckende Zahnreihen ausbilden, um die wenigstens ein Ankerdraht (15) wickelbar ist,
wobei das Ankerpaket (13; 13a) an seinen beiden gegenüberliegenden Stirnseiten Stirnflächen (28; 31; 43) aufweist, die zumindest teilweise in ihren radial äußeren Bereichen einen größeren Abstand zueinander aufweisen als an ihren radial inneren Bereichen,
wobei die Zähne (18a; 18b) der stirnseitig jeweils ersten Ankerbleche (40) von den darunter liegenden Zähnen der Ankerbleche (41) des Ankerpakets (13a) weggebogen sind, so dass eine trichterförmige Stirnfläche (43) zur Ankerwelle (11) hin als Anlage für den Ankerdraht (15) ausgebildet wird, **dadurch gekennzeichnet, dass** die Abschlussbereiche (19b) der Zähne (18b) der ersten Ankerbleche (40) in Richtung der darunter liegenden Zähne der Ankerbleche (41) umgebogen sind.

2. Ankerbaugruppe nach Anspruch 1,
**dadurch gekennzeichnet,**
**dass** zwei Gruppen gegenüberliegender jeweils benachbarter Zähne (1) und (2) jeweils gemeinsam mit einer ersten Wickellage (4), und zwei Gruppen gegenüberliegender jeweils benachbarter Zähne (2) und (3) jeweils gemeinsam mit der zweiten Wickellage (5) umwickelt sind.

3. Ankerbaugruppe nach Anspruch 1 oder 2,
**dadurch gekennzeichnet, dass**
die Abschlussbereiche (19b) der Zähne (18; 18a; 18b) der ersten Ankerbleche T-förmigen ausgebildet sind, und die darunter liegenden Zähne (18; 18a; 18b) kontaktieren, und insbesondere die Abschlussbereiche (19b) bezüglich der Umfangsrichtung gewölbt ausgebildet sind.

4. Ankerbaugruppe nach einem der Ansprüche 1 - 3,
**dadurch gekennzeichnet,**
**dass** der Ankerdraht (15) zumindest auf der einem Kommutator (12) zugewandten Seite vor dem Verbinden mit dem Kommutator (12) in einem radialen, umlaufenden Zwischenraum (46) zwischen dem die weggebogenen Zähne (18a; 18b) aufweisenden Ankerblech (40) und dem darunter liegenden Ankerblech (41) in wenigstens einer Wicklungslage angeordnet ist.

5. Ankerbaugruppe nach Anspruch 4,
**dadurch gekennzeichnet, dass** die weggebogenen oder umgebogenen Zähne (18a; 18b) sich axial an dem im Zwischenraum (46) angeordneten Ankerdraht (15) abstützen, wobei der im umlaufenden Zwischenraum (46) gewickelte Ankerdraht (15) die Ankerdrahtwicklungen in den sich in Längsrichtung erstreckende Zahnreihen bezüglich der Radialrichtung umschließt.

6. Ankerbaugruppe nach Anspruch 4,
**dadurch gekennzeichnet, dass** das Ankerblech (41) in seinem radial äußeren Bereich gekürzte Zähne (18) aufweist und, dass sich an das die gekürzten Zähne (18) aufweisende Ankerblech (41) auf der Seite des Kommutators (12) wenigstens ein Ankerblech (40) mit nicht gekürzten Zähnen (18a) anschließt.

7. Ankerbaugruppe nach Anspruch 1
**dadurch gekennzeichnet,**
**dass** sich der Abstand radial von innen nach außen stetig vergrößert, so dass die Form der als Anlage ausgebildeten Stirnfläche (43) in radialer Richtung insbesondere keilförmig ist.

## Claims

1. Armature assembly (10) having an armature core (13; 13a) which is made up of a large number of armature laminations (14; 40, 41) and which is arranged on an armature shaft (11) in a rotationally fixed manner, wherein the armature laminations (14; 40, 41) which are layered axially one on the other have radially extending teeth (18; 18a; 18b) which are arranged at angular distances from one another and have termination regions (19; 19a; 19b), wherein the teeth (18; 18a; 18b) of the armature core (13; 13a) form rows of teeth which extend in the longitudinal direction and around which the at least one armature wire (15) can be wound, wherein the armature core (13; 13a) has end faces (28; 31; 43) at its two opposite ends, the said end faces being at a greater distance from one another at least partially in their radially outer regions than at their radially inner regions, wherein the teeth (18a; 18b) of the armature laminations (40) which are in each case first at the ends are bent away from the teeth of the armature laminations (41) of the armature core (13a) which are situated beneath them, so that a funnel-like end face (43) is formed in the direction of the armature shaft (11) as a support for the armature wire (15), **characterized in that** the termination regions (19b) of the teeth (18b) of the first armature laminations (40) are bent over in the direction of the teeth of the armature laminations (41) which are situated beneath them.

2. Armature assembly according to Claim 1, **characterized in that** two groups of opposite teeth (1) and (2), which teeth are adjacent in each case, are in each case jointly wound by a first winding layer (4), and two groups of opposite teeth (2) and (3), which teeth are adjacent in each case, are in each case jointly wound by the second winding layer (5).

3. Armature assembly according to Claim 1 or 2, **characterized in that** the termination regions (19b) of the teeth (18; 18a; 18b) of the first armature laminations are T-shaped, and make contact with the teeth (18; 18a; 18b) which are situated beneath them, and in particular the termination regions (19b) are curved with respect to the circumferential direction.

4. Armature assembly according to one of Claims 1-3, **characterized in that** the armature wire (15) is arranged, at least on the side which faces a commutator (12), before it is connected to the commutator (12), in a radial, circumferential intermediate space (46) between the armature lamination (40), which has the bent-away teeth (18a; 18b), and the armature lamination (41) which is situated beneath it, in at least one winding layer.

5. Armature assembly according to Claim 4, **characterized in that** the bent-away or bent-over teeth (18a; 18b) are supported axially on the armature wire (15) which is arranged in the intermediate space (46), wherein the armature wire (15) which is wound in the circumferential intermediate space (46) surrounds the armature wire windings in the rows of teeth, which rows of teeth extend in the longitudinal direction, with respect to the radial direction.

6. Armature assembly according to Claim 4, **characterized in that** the armature lamination (41) has shortened teeth (18) in its radially outer region, and **in that** at least one armature lamination (40) with non-shortened teeth (18a) adjoins the armature lamination (41), which has the shortened teeth (18), on the side of the commutator (12).

7. Armature assembly according to Claim 1, **characterized in that** the distance continuously increases radially from the inside to the outside, so that the shape of the end face (43), which is in the form of a support, is, in particular, wedge-shaped in the radial direction.

## Revendications

1. Module d'induit (10), comprenant un noyau feuilleté d'induit (13 ; 13a) constitué d'une pluralité de tôles d'induit (14 ; 40, 41), lequel noyau feuilleté d'induit est disposé de manière solidaire en rotation sur un arbre d'induit (11), les tôles d'induit (14 ; 40, 41) empilées axialement les unes contre les autres comprenant des dents (18 ; 18a ; 18b) disposées à des distances angulaires les unes des autres et s'étendant radialement, lesquelles dents sont pourvues de régions d'extrémité (19 ; 19a ; 19b), les dents (18 ; 18a ; 18b) du noyau feuilleté d'induit (13 ; 13a) formant des rangées de dents s'étendant dans la direction longitudinale, autour desquelles au moins un fil d'induit (15) peut être bobiné,
le noyau feuilleté d'induit (13 ; 13a) comprenant, au niveau de ses deux côtés frontaux opposés, des surfaces frontales (28 ; 31 ; 43) qui présentent au moins partiellement dans leurs régions radialement extérieures une plus grande distance les unes par rapport aux autres que dans leurs régions radialement intérieures,
les dents (18a ; 18b) des premières tôles d'induit (40) du côté frontal étant à chaque fois repliées à l'écart des dents sous-jacentes des tôles d'induit (41) du noyau feuilleté d'induit (13a), de telle sorte qu'une surface frontale (43) en forme d'entonnoir soit réalisée en direction de l'arbre d'induit (11) en tant que butée pour le fil d'induit (15),
**caractérisé en ce que** les régions d'extrémité (19b) des dents (18b) des premières tôles d'induit (40) sont recourbées en direction des dents sous-jacentes des tôles d'induit (41).

2. Module d'induit selon la revendication 1,
**caractérisé en ce que**
deux groupes de dents respectivement adjacentes opposées (1) et (2) sont à chaque fois enveloppés conjointement d'une première couche de bobinage (4), et deux groupes de dents respectivement adjacentes opposées (2) et (3) sont à chaque fois enveloppés conjointement de la deuxième couche de bobinage (5).

3. Module d'induit selon la revendication 1 ou 2,
**caractérisé en ce que**
les régions d'extrémité (19b) des dents (18 ; 18a ; 18b) des premières tôles d'induit sont réalisées en forme de T, et sont en contact avec les dents (18 ; 18a ; 18b) sous-jacentes, et en particulier les régions d'extrémité (19b) sont réalisées de manière arquée par rapport à la direction périphérique.

4. Module d'induit selon l'une quelconque des revendications 1 à 3,
**caractérisé en ce que**
le fil d'induit (15) est disposé, du côté tourné vers un collecteur (12), avant la connexion au collecteur (12), en au moins une couche de bobinage dans un espace intermédiaire (46) périphérique radial entre la tôle d'induit (40) comprenant les dents repliées (18a ; 18b) et la tôle d'induit (41) sous-jacente.

5. Module d'induit selon la revendication 4,
**caractérisé en ce que** les dents (18a ; 18b) repliées ou recourbées s'appuient axialement contre le fil d'induit (15) disposé dans l'espace intermédiaire (46), le fil d'induit (15) bobiné dans l'espace intermédiaire (46) périphérique entourant les enroulements de fil d'induit dans les rangées de dents s'étendant dans la direction longitudinale par rapport à la direction radiale.

6. Module d'induit selon la revendication 4,
**caractérisé en ce que** la tôle d'induit (41) comprend dans sa région radialement extérieure des dents (18) raccourcies, et **en ce que**, du côté du collecteur (12), au moins une tôle d'induit (40) pourvue de dents (18a) non raccourcies est adjacente à la tôle d'induit (41) comprenant les dents (18) raccourcies.

7. Module d'induit selon la revendication 1,
**caractérisé en ce que**
la distance augmente de manière continue radialement de l'intérieur vers l'extérieur, de telle sorte que la forme de la surface frontale (43) réalisée sous forme de butée soit en particulier cunéiforme dans la direction radiale.
